# EUROPÄISCHE PATENTANMELDUNG

(11) **EP 0 980 823 A2**
(43) Veröffentlichungstag der Anmeldung: **23.02.2000**
(21) Anmeldenummer: 99115190.3
(22) Anmeldetag: 16.08.1999
(51) Int. Cl.: B64C 23/00, B64C 5/12

(54) **Rumpfnase zur Steuerung von Fluggeräten**

(30) Priorität: 20.08.1998 DE 19837800
(71) Anmelder: DaimlerChrysler AG, 70567 Stuttgart (DE)
(72) Erfinder: Hakenesch, Peter, Dr., 85521 Ottobrunn (DE)

(57) **Zusammenfassung**

Steuerungseinrichtung für Fluggeräte mit einem Rumpfnasensegment (3) und zumindest einem Strake (5, 6), wobei das Rumpfnasensegment (3) rotatorisch gegenüber dem Flugzeugrumpf (1) verstellbar ist und der zumindest ein Strake (5, 6) an dem Rumpfnasensegment (3) ausklappbar angebracht ist.

## Beschreibung

Die Erfindung betrifft eine Rumpfnase zur Steuerung von Fluggeräten, insbesondere von Flugkörpern.

Aus der US 3,642,234 ist ein Hochleistungsflugzeug offenbart, das an seinem vorderen Rumpfteil eine ein- und ausziehbare Vorflügel-Anordnung aufweist. Diese dient im ausgefahrenen Zustand dazu, in bestimmten Flugzuständen das positive Nickmoment zu erhöhen.

Aus der DE-OS 19 56 173 ist ein strahlgesteuertes Flugzeug mit im Bereich des Pilotenraums angeordneten Steuer- bzw. Trimmklappen bekannt, die derart einklappbar angeordnet sind, daß sie im eingeklappten Zustand mit der Außenhaut des Flugzeugrumpfes identisch sind.

Aus der US 4,786,009 ist ein Verfahren bzw. eine Vorrichtung zur Steuerung der Gierbewegung eines Luftfahrzeugs bekannt, das bzw. die bei hohen Anstellwinkeln, bei denen die Steuerflächen des Luftfahrzeugs ineffektiv sind, vorgesehen ist. Dabei werden zwei Strakes symmetrisch zueinander und beweglich am vorderen Rumpfsegment angeordnet, um in kontrollierter Weise Wirbel am vorderen Teil des Rumpfs zu erzeugen. Die Auslenkungen der beiden Strakes werden anti-symmetrisch gesteuert, um asymmetrische Wirbel am vorderen Teil des Rumpfs und damit Gierkräfte zu erzeugen.

Aus der DE-OS 29 17 096 ist ein Luftfahrzeug mit einer Sensoreinrichtung zur Überwachung einer zu überfliegenden Landschaft bekannt. Das Luftfahrzeug hat einen um die Längsachse drehbar ausgebildeten Bug mit einer um eine Querachse schwenkbaren und die Sensoreinrichtung tragenden Bugspitze. Die Unterseite des Bugs ist mit einem Sichtschacht für eine im weiten Winkel nach hinten gerichtete Überwachung, Zielverfolgung und Schräg- oder Feuerleitung versehen.

Der Flugbereich von konventionell gesteuerten Fluggeräten wird im höheren Anstellwinkelbereich, d.h. bei Anstellwinkeln oberhalb 45°, unter anderem durch den Wegfall der Wirksamkeit des Seitenruders limitiert. Aus dem Stand der Technik ist als Maßnahme zur Erhöhung des erfliegbaren Anstellwinkelbereiches die Schubvektorsteuerung bekannt. Derartige Lösungen sind jedoch sowohl gerätetechnisch als auch steuerungstechnisch sehr aufwendig.

Es ist daher eine Aufgabe der Erfindung, möglichst einfache technische Maßnahmen bereitzustellen, mit der der durch Fluggeräte erfliegbare Anstellwinkelbereich erhöht werden kann.

Die Aufgabe wird mit den Merkmalen des Anspruchs 1 gelöst. Alternative Ausführungsformen sind in den Unteransprüchen angegeben.

Die Erfindung hat den Vorteil, daß sie mit verhältnismäig geringem konstruktiven und gerätetechnischen Aufwand realisierbar ist. Die Erfindung weist ein erhebliches Steuerungspotential in Folge der Rumpfnasen-Strakes gerade in dem Anstellwinkelbereich auf, bei dem das konventionelle Seitenruder seine Funktion bereits vollständig eingebüßt hat. Mit den erfindungsgemäßen Rumpfnasen-Strakes lassen sich nicht nur Gierbewegungen des Fluggeräts einleiten, sondern es läßt sich bei Vorliegen eines Schiebewinkels die Drehbewegung um die Hochachse auch ausleiten.

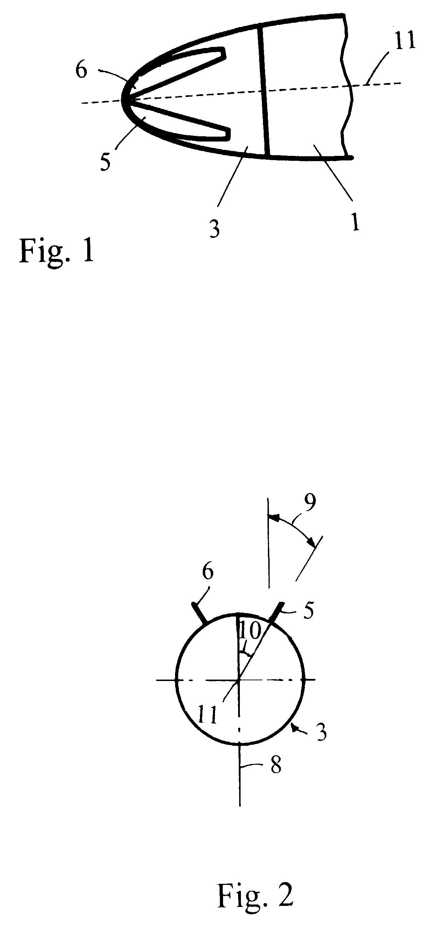

Die Erfindung wird im folgenden anhand der Figuren 1 und 2 beschrieben, die zeigen:
- **Figur 1**: eine Draufsicht auf den vorderen Teil eines Flugzeugrumpfes mit dem Rumpfnasensegment und mit erfindungsgemäßen, ausklappbaren Strakes und
- **Figur 2**: eine schematische Darstellung der Rumpfnase mit zwei vereinfacht gezeichneten Strakes von vorne gesehen, wobei sich die zwei Strakes in einer ausgefahrenen Stellung befinden.

Figur 1 zeigt den vorderen Teil eines Flugzeugrumpfs 1, an dem ein Rumpfnasensegment 3 innerhalb eines Winkelbereichs 2 rotatorisch verstellbar angebracht ist. An dem Rumpfnasensegment 3 sind wiederum zumindest zwei ausklappbare Strakes 5, 6 angeordnet.

Vorzugsweise ist jeder Strake 5, 6 im Bereich der Spitze, d. h. im in Flugrichtung gesehen vorderen Bereich des Rumpfnasensegments 3 angebracht. Alternativ dazu kann ein oder mehrere Strakes 5, 6 auch an einer anderen Stelle des Rumpfnasensegments 3 angebracht sein. Die Strakes 5, 6 verlaufen bei der in der Figur 1 dargestellten Mittelstellung der rotatorisch verstellbaren Strakes 5, 6 symmetrisch zur Hochachse 8 des Flugzeugrumpfs 1. Die Strakes sind ausklappbar am Rumpfnasensegment 3 angebracht und nehmen ausgehend von einer Nullage, bei der die Strakes vorzugsweise am Rumpfnasensegment 3 anliegen, eine momentane Ausklapp-Position ein. Ausgehend von einer Nullage nimmt das Rumpfnasensegement 3 je nach der erfolgten rotatorischen Verstellung desselben einen momentnen Verstellwinkel 10 ein. Da die Strakes 5, 6 am Rumpfnasensegment 3 angebracht sind, werden sie in einer momentanen Ausklapp-Position 9 durch die rotatorische Bewegung bei der Verstellung des Rumpfnasensegments 3 um die Längsachse 11 des Fluggeräts verschwenkt. Die momentane Ausklapp-Position 9 ist in der Figur 2 in der Sicht von vorne, d.h. entgegen der Flugzeug-Längsachse 11 dargestellt.

Erfindungsgemäß kann auch nur ein Strake oder mehr als zwei Strakes am Rumpfnasensegment 3 angebracht sein. Vorzugsweise sind die Strakes 5, 6 symmetrisch zu einer jeweils zu bestimmenden Achse angeordnet, wobei bei einer ungeradzahligen Anzahl von Strakes die Längsachse eines Strakes vorzugsweise auf der Symmetrieachse liegt.

Die jeweilige Form der Strakes 5, 6 hängt vom Anwendungsfall, der Einsatzart des Fluggeräts und dem Flugbereich des Fluggeräts ab. Um die Strakes ausklappbar zu gestalten, sind vorzugsweise im Bereich der Spitze des Rumpfnasensegments drei Aktuatoren vorgesehen, die eine Schwenkbewegung der Strakes 5, 6 bewirken. Sowohl für die Aktuatoren zur Betätigung der Strakes als auch für die Aktuatoren zur rotatorischen Verstellung des Rumpfnasensegments 3 relativ zum Flugzeugrumpf 1 sind Aktuatoren und entsprechende Steuerungs- und Versorgungssysteme nach dem Stand der Technik vorgesehen. Die Ausklapp-Bewegung der Strakes 5, 6 verläuft vorzugsweise senkrecht zu dem Oberflächenbereich des Rumpfnasensegments 3, auf dem sie in der eingefahrenen Stellung anliegen.

Das hier vorgeschlagene Steuerungskonzept beruht auf der Möglichkeit, durch eine gezielte Beeinflussung der Wirbelsysteme, die das Flugverhalten dominieren, Steuerkräfte und -momente für das Fluggerät zu erzeugen. Hierbei werden die im vorderen Rumpfnasenbereich beginnenden Wirbel durch eine entsprechende Betätigung der Strakes 5, 6 derart beeinflußt, daß sie die Kräfte und Momente erzeugen, die zum Ein- und Ausleiten von Drehbewegungen des Fluggeräts erforderlich sind, so daß sie die Funktion des Seitenruders zumindest teilweise übernehmen.

Zur Durchführung eines gewünschten Flugmanövers sind zur Erzeugung der erforderlichen Wirbelsysteme die Strakes 5, 6 auf einer optimalen Winkelposition in Abhängigkeit von den jeweiligen Anströmbedingungen zu positionieren. Die momentane Winkelposition ergibt sich aus dem momentanen Verstellwinkel 10 des Rumpfnasensegments 3 und der momentanen Ausklapp-Position 9 der Strakes 5, 6. Dies geschieht dadurch, daß das Rumpfnasensegment 3 mit dem zumindest zwei ausklappbaren Strakes 5, 6 vorzugsweise kontinuierlich um einen Winkel 10 innerhalb eines vorgegebenen Winkelbereichs um die Flugzeuglängsachse 11 gegenüber dem Flugzeugrumpf 1 verdreht wird und die Strakes 5, 6 kontinuierlich in eine Ausklapp-Position 9 gebracht wird, die sich u.a. je nach Fugzustand kontinuierlich verändert. Die momentane Strakeposition mit dem Verstellwinkel 10 des Rumpfnasensegments 3 und der Ausklapp-Position 9 erfolgen aufgrund der in entsprechenden Einrichtungen nach dem Stand der Technik erfaßten Anströmgrößen und des erfaßten aktuellen Flugzustands sowie aufgrund der gewünschten Flugbewegung gemäß einem zuvor ermittelten Fahrgesetz.

Ein Wegfall oder zumindest eine Verkleinerung des Seitenleitwerks, der bzw. die durch die zur Steuerung des Flugzeugs verwendeten Strakes erreicht wird, führt neben einer Reduzierung des Gesamtstrukturgewichts und des Gesamtwiderstands auch zu einer Verringerung der Radarsignatur im Seitenaspekt und des Wellenwiderstands im Überschallbereich.

## Patentansprüche

1. Steuerungseinrichtung für Fluggeräte mit einem Rumpfnasensegment (3) und zumindest einem Strake (5, 6), **dadurch gekennzeichnet**, daß das Rumpfnasensegment (3) rotatorisch gegenüber dem Flugzeugrumpf (1) verstellbar ist und der zumindest eine Strake an dem Rumpfnasensegment (3) ausklappbar angebracht ist.

2. Steuerungseinrichtung für Fluggeräte nach dem Anspruch 1, **dadurch gekennzeichnet**, daß der zumindest eine Strake (5, 6) am vorderen Bereich des Rumpfnasensegments (3) angebracht ist.

3. Steuerungseinrichtung für Fluggeräte nach einem der voranstehenden Ansprüche, **dadurch gekennzeichnet**, daß mehrere Strakes (5, 6) vorgesehen sind, die symmetrisch am Rumpfnasensegment (3) angebracht sind.

4. Steuerungseinrichtung für Fluggeräte nach einem der voranstehenden Ansprüche, **dadurch gekennzeichnet**, daß der Verdrehwinkel des Rumpfnasensegments (3) relativ zum Flugzeugrumpf (1) und die Ausklapp-Position des zumindest einem Strakes (5, 6) automatisch aufgrund der Stellsignale eines an Bord des Fluggerätes befindlichen Steuerungssystems erfolgt.
